# EUROPÄISCHE PATENTSCHRIFT

(11) **EP 0 990 221 B1**
(45) Veröffentlichungstag und Bekanntmachung des Hinweises auf die Patenterteilung: **16.05.2001**
(21) Anmeldenummer: 98941224.2
(22) Anmeldetag: 22.06.1998
(51) Int. Cl.: G06K 19/077, G06K 19/07

(54) **CHIPKARTE MIT MINDESTENS ZWEI SPULENANORDNUNGEN ZUR ÜBERTRAGUNG VON DATEN UND/ODER ENERGIE**
CHIP CARD WITH AT LEAST TWO COIL DEVICES FOR TRANSFERRING DATA AND/OR ENERGY
CARTE A PUCE COMPORTANT AU MOINS DEUX DISPOSITIFS BOBINES ET PERMETTANT DE TRANSMETTRE DES DONNEES ET/OU DE L'ENERGIE

(30) Priorität: 20.06.1997 DE 19726335
(43) Veröffentlichungstag der Anmeldung: 05.04.2000
(73) Patentinhaber: Angewandte Digital Elektronik GmbH, 21521 Dassendorf (DE)
(72) Erfinder: KREFT, Hans-Diedrich, D-21521 Dassendorf (DE)
(74) Vertreter: Mierswa, Klaus, Dipl.-Ing.
(86) Internationale Anmeldenummer: DE9801712
(87) Internationale Veröffentlichungsnummer: WO9901844

(56) Entgegenhaltungen:
- DE-C- 4 327 334
- DE-C- 19 509 517

## Beschreibung

### Technisches Gebiet:

Die Erfindung betrifft eine Chipkarte mit mindestens zwei Spulenanordnungen zur kontaktfreien sowie gegebenenfalls mit Kontakten zur kontaktbehafteten jeweiligen Übertragung von Daten und/oder Energie mit einem Schreib-/Lesegerät (Terminal).

### Stand der Technik und Problemstellung:

Zunehmend kommen kontaktfreie Chipkarten zum Einsatz, die Energie und Daten kontaktfrei mit ihrer Umwelt austauschen, wenn sie sich in einem elektromagnetischen Feld befinden, welches von Spulen in einem Terminal erzeugt wird. Die Entfernung zwischen Chipkarte und Terminal kann in der Regel zwischen einigen Millimetern (Nahbereich, close coupled, beschrieben in ISO 10536) bis zu 15 Zentimetern (Fernbereich, remote coupled, beschrieben in ISO 14443) liegen. Es besteht bei diesen Chipkarten das Problem, dass sie ohne Einstecken in ein Terminal über Entfernung - unbemerkt für den Nutzer - in ihrem Speicher geändert werden können.

Durch die DE 43 27 334 C1 ist eine Chipkarte bekannt geworden, welche zwischen Nahbereich und Fernbereich bzw. Nicht-Nahbereich unterscheiden kann. Als Unterscheidungsmerkmal für Nah- und Fernbereich dient eine Phasendifferenz zwischen zwei Signalen, zu deren Detektion sich vorzugsweise Spulen eignen, wie sie in der ISO 10 536 beschrieben sind. Es ist auch möglich, auf der Chipkarte Spulenanordnungen zu kombinieren, wie sie in der ISO 14 443 und in der ISO 10 536 beschrieben sind. Zusätzlich können auch auf den Chipkarten Kontakte vorhanden sein. Mit diesen unterschiedlichen Kommunikationselementen (Spulen nach ISO 14 443, ISO 10 536 und Kontakten) können Chipkarten in unterschiedlichster Weise mit ihrer Umwelt Daten und Energie austauschen. Aus Sicherheitsgründen wird die Unterscheidung der Nutzung einer Chipkarte im Nahbereich eines Terminals, z.B. durch Einschieben in einen Schlitz, von der im Fernbereich unterschieden. Daten, die beispielsweise Geldbeträge repräsentieren, sollen ausschließlich nur dann geladen werden können, wenn die Chipkarte in einen Schlitz eines Terminals gesteckt wird und sich innerhalb des geschützten Terminals befindet. Es soll nämlich ausgeschlossen sein, dass bestimmte Speicherbereiche auf der Chipkarte oder bestimmte Funktionen der Chipkarte über Entfernung unbemerkt für den Nutzer aktiviert werden.

Im einzelnen dazu ist aus der DE 43 27 334 A1 eine Chipkarte zum kontaktlosen Datentransfer mit einem ein Sendeelement aufweisenden Terminal bekannt mit kontaktloser Energieversorgung mit mindestens zwei räumlich voneinander getrennten Empfangselementen zum Empfang von elektromagnetischen, optischen oder akustischen Wechselfeldern. Auf der Chipkarte ist eine erste Elektronik E1 vorgesehen, welche die an den Empfangselementen empfangenen Wechselfeldkomponenten ohne Auswertung der Intensitäten aufbereitet und als Signale an eine zweite Elektronik E2 abgibt. Eine zwischen den empfangenen Wechselfeldkomponenten auftretende Phasenverschiebung in den Signalen wird eindeutig abgebildet, wobei am Signalausgang der Elektronik E2 ein Signal mit einem bestimmten Pegel PHS abgegeben wird, wenn der Phasenunterschied zwischen den beiden Signalen einen konstanten voreingestellten Wert überschreitet; im anderen Fall wird ein Signal mit einem unterschiedlichen Pegel PHS' abgegeben. Der Pegel PHS indiziert, dass sich die Empfangselemente in einem zu den Sendeelementen benachbarten Raumgebiet, dem sogenannten Stereotrenngebiet, befinden, wobei das Signal mit dem Pegel PHS zur Aktivierung bestimmter Funktionen der Chipkarte im Stereotrenngebiet benutzt wird. Insbesondere kann die auszuwertende Phasenverschiebung und in ihrer Folge das Signal PHS von mehreren Wechselfeldquellen an verschiedenen Orten zur Verfügung gestellt werden, indem diese Quellen untereinander verschiedene Phasenlagen aufweisen, und sich diese verschiedenen Wechselfelder in dem umgebenden Raum überlagern und dadurch ortsabhängig unterschiedliche resultierende Phasen-Gradienten verursachen. Insbesondere ist der konstante Wert auf eine solche Größe fest eingestellt, dass außerhalb der Einbehaltungsreichweite des Terminals kein Nahbetrieb möglich ist. Aus der DE 43 27 334 A1 ist somit wohl zu entnehmen, wie ein Signal erzeugt wird, welches den Nahbereich zwischen Chipkarte und Terminal indiziert. Jedoch ist über das Zusammenwirken zwischen den Spulen für den Fernbereich, den Nahbereich und den Kontakten nichts ausgesagt.

Durch die DE 39 35 364 ist des Weiteren eine Chipkarte bekannt geworden, welche selbsttätig in einem Chip zwischen den Funktionen Kontaktbetrieb und kontaktfreier Betrieb unterscheidet. Auch hier wird nicht zwischen verschiedenen Funktionsstufen, welche durch unterschiedliche Entfernungen charakterisiert sind, unterschieden.

Durch die DE 195 09 517 C1 ist gemäß dem vorgenannten Oberbegriff der Erfindung eine Vorrichtung mit einem Kartenendgerät zur Übertragung von Energie und Daten zu Chipkarten über elektromagnetische Wellen bekannt geworden, bei welcher sich die von verschiedenen Kartenendgeräten gesendeten elektromagnetischen Wellen in einem oder mehreren physikalischen Merkmalen, wie Amplitude, Frequenz, Phase, Energiedichte, Raumrichtung, elektrische oder magnetische Feldkomponente unterscheiden. Zum Empfang der elektromagnetischen Wellen enthält die Chipkarte eine elektronische Schaltung, die die Wellen nach ihren physikalischen Merkmalen auswertet und gemäß dem Ergebnis unterschiedliche Funktionsteile der Schaltung aktiviert und dementsprechend der Energie- und Datenaustausch entsprechend der speziellen Funktion der jeweils aktivierten Funktionsteile der Schaltung erfolgt.

Durch die DE 42 05 827 A1 ist eine Chipkarte zum kontaktfreien, bidirektionalen Übertragen von Energie und Daten mit einem Terminal bekannt geworden, die einen Mikroprozessor und einen Speicher sowie eine Spule für den Nahbereich, einen elektromagnetischen Schwingkreis für den Fernbereich sowie einen Energiespeicher und einen manuell betätigbaren Schalter umfasst. Bei Betätigung des Schalters wird ein codiertes fernwirkendes elektromagnetisches Wechselfeld des Schwingkreises zur Datenübertragung aus oder in den Speicher ausgelöst.

### Technische Aufgabe:

Der Erfindung liegt deshalb die Aufgabe zugrunde, eine Chipkarte der genannten Gattung zu schaffen, welche unterschiedliche Funktionsweisen des Chips oder Teile davon in Abhängigkeit von der Indikation Nahbereich und/oder Fernbereich unter Ausnutzung des Stereoeffekts steuert.

### Beschreibung der patentgemäßen Lösung und deren Vorteile:

Die Lösung der Aufgabe ist gekennzeichnet durch eine Chipkarte mit mindestens zwei Spulenanordnungen zur kontaktfreien sowie gegebenenfalls mit Kontakten zur kontaktbehafteten jeweiligen Übertragung von Daten und/oder Energie mit einem Schreib-/Lesegerät (Terminal), wobei eine oder mehrere der Spulen der ersten Spulenanordnung solche für den Nahbereich (Nahbereichs- oder Stereospulen) und eine oder mehrere der Spulen der zweiten Spulenanordnung solche für den Fernbereich (Fernbereichsspulen) sind, mit einer Elektronik, die mit den Spulenanordnungen und gegebenenfalls den Kontakten verbunden und die geeignet ist, zwischen den unterschiedlichen Spulenanordnungen entsprechend unterschiedlicher physikalischer Merkmale, wie Phasen- und/oder Frequenzund/oder Amplituden- und/oder Energieunterschiede, zu unterscheiden, wobei a) in einem ersten Teil der Elektronik ein Stereosignal (S1) erzeugt wird, welches einen ersten charakteristischen Wert (A1) annimmt, wenn die Fernbereichs- und die Nahbereichsspule(n) sich gleichzeitig in einem elektromagnetischen Wechselfeld befinden und die Energieeinspeisung über die Fernbereichsspule(n) ausreicht, um die Elektronik oder wenigstens den ersten Teil zu aktivieren, b) wobei Unterschiede im elektromagnetischen Wechselfeld zwischen den Fernbereichsund den Nahbereichsspule(n) in Form von Phasen- und/oder Frequenz- und/oder Amplituden- und/oder Energiedifferenzen genutzt werden, um einen zweiten charakteristischen Wert (A2) des Stereosignals (S1) zu erzeugen, c) wenn die Unterschiede im elektromagnetischen Wechselfeld zwischen den Fernbereichsund den Nahbereichsspule(n) verschwinden, in Folge davon das Stereosignal S1 ausbleibt oder einen weiteren, dritten charakteristischen Wert (A3) annimmt und in diesen beiden Fällen die Chipkarte mit ihrer Umwelt so lange mit eingeschränkten Funktionen nutzbar bleibt, wie die eingestrahlte Energie aus den Fernbereichsspule(n) dies zulässt, d) hingegen bei Vorliegen des Stereosignals (S1) mit dem zweiten charakteristischen Wert (A2) die Chipkarte mit zusätzlichen Funktionen über die eingeschränkte Funktion hinaus nutzbar ist.

Vorteilhaft ist es durch die Erfindung möglich, die Funktion einer Chipkarte in Abhängigkeit von der Indikation Nahbereich und/oder Fernbereich zu steuern und dabei den Stereoeffekt bzw. ein dadurch geschaffenes Stereosignal auszunutzen. Somit ist es möglich, unterschiedliche Sicherheitsstufen beim Zugriff auf Speicher oder Speicherteile in Abhängigkeit von der Funktion Nahoder Fernbereich, zu aktivieren.

In weiterer Ausgestaltung hat bei Vorliegen des Stereosignals (S1) mit dem ersten Wert (A2) und ausreichender Energieeinspeisung über die Nahbereichsspule(n) der erste Teil der Elektronik bzw. des Chips die Dominanz über alle weiteren Teile bzw. Elektronikteile inne, so daß er wahlweise die anderen Teile bzw. Elektronikteile ein oder auszuschalten und/oder bestimmte Funktionen in den anderen Teilen bzw. Elektronikteilen zu aktivieren oder zu deaktivieren imstande ist.

Bei einer Chipkarte mit Kontakten wird bei Vorliegen des Stereosignals (S1) mit dem ersten oder zweiten oder dritten Wert (A1,A2,A3) eine Kommunikation über die Kontakte unterbrochen und/oder abhängig vom entsprechenden Stereosignal (S1) gesteuert.

Ein weiterer, zweiter Elektronikteil ist direkt mit den Nahbereichsspule(n) verbunden, welcher die über die Nahbereichsspule(n) eingehenden Signale in einer solchen Form der Elektronik und/oder dem ersten Teilen davon zur Verfügung stellt, wie sie den Signalen bei Eingang über die Kontakte vergleichbar sind, beispielsweise Gleichrichtung, so daß der weitere zweite Elektronikteil Funktionen ausführt, wie sie auch bei Eingang der Signale über die Kontakte ausführbar sind.

Vorteilhaft ist wenigstens ein weiterer, dritter Elektronikteil vorhanden, welcher bei Vorliegen eines der unterschiedlichen Werte (A1,A2,A3) oder beim Ausbleiben des Stereosignals (S1) ein für Menschen wahrnehmbares optisches oder akustisches Signal aussendet, womit ein Nutzer der Chipkarte zwischen verschiedenen Funktionsweisen zu unterscheiden in der Lage ist.

Daneben kann wenigstens ein Teil der Fernbereichsspule(n) und/oder der Nahbereichsspule(n) als Kondensatoren ausgeführt sein, die ebenfalls zum Übertragen von Daten und/oder Energie dienen. Dabei können bei einer Chipkarte mit Kontakten ausschließlich Nahbereichsspule(n) und/oder Kondensatoren vorhanden sein, wobei das Stereosignal (S1) unterschiedliche Werte (A1,A2, ..., An) annimmt, welche jeweils zur Steuerung der Funktionen der Elektronik der Chipkarte dienen.

Vorteilhaft werden wechselweise über die Fernbereichsspule(n) und/oder die Nahbereichsspule(n) Energie und Daten und/oder über die Kontakte Daten und Energie ausgetauscht, wobei die von den Kontakten eingehenden Daten über die Spulen und die über Spulen eingegebenen Daten über die Kontakte ausgegeben werden.

Bei der Verwendung von unterschiedlichen Frequenzen als physikalisches Unterscheidungsmerkmal wird vorteilhaft in die Nahbereichsspule(n) (2) eine andere Frequenz eingekoppelt als in die Fernbereichsspule(n) 3, indem die der Nahbereichsspule(n) 2 benachbart lokalisierte Spule des Terminals mit einer anderen Frequenz schwingt, als diejenige Spule des Terminals, welche mit der Fernbereichsspule(n) 3 der Chipkarte gekoppelt ist.

Die Zeichnung zeigt ein Blockschaltbild der einzelnen Funktionsbausteine einer erfindungsgemäßen Chipkarte.

Wege zur Ausführung der Erfindung:

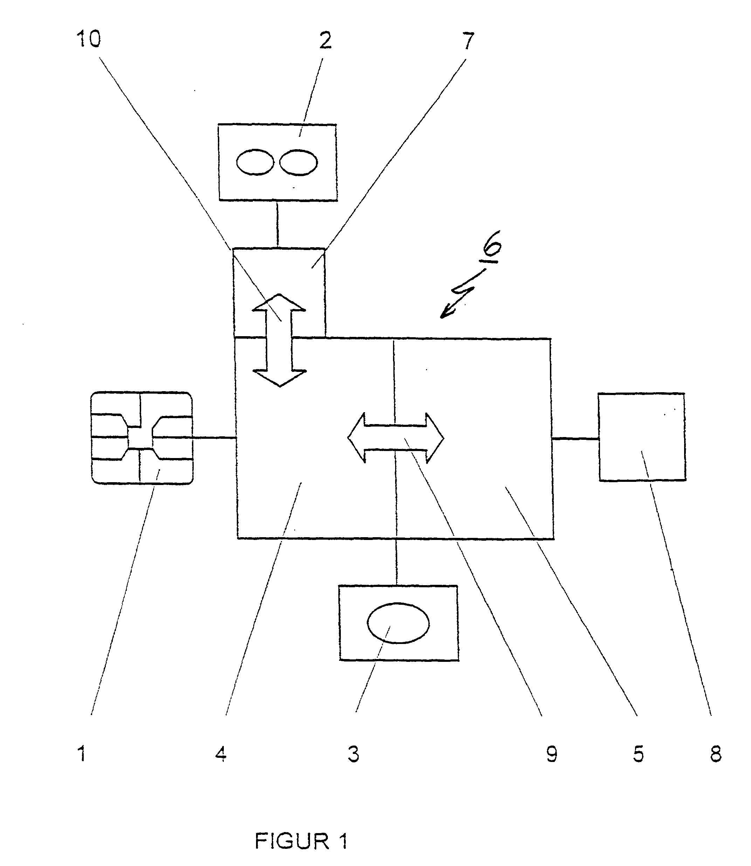

Figur 1 stellt schematisch die einzelnen Teile der patentgemäß beschriebenen Chipkarte dar. Mit der Bezugsziffer 1 ist ein Kontaktfeld 1 bzw. Kontakte symbolisiert, welches an eine Elektronik 6 bzw. einen Chip 6 angeschlossen ist. Der Chip 6 besteht im wesentlichen aus den beiden Teilen 4 und 5, zwischen denen per Pfeil 9 Daten und Energie ausgetauscht werden können. Im Teil 4 wird ein Stereosignal (S1) erzeugt, der Teil 5 kann beispielsweise einen Speicher oder verschiedene Speicher wie auch ein Rechenwerk beherbergen. Nahbereichs- oder Stereospulen 2 sind mit einem zweiten Elektronikteil 7 verbunden, welcher die Signal- bzw. Energieeingänge über die Nahbereichsspulen 2 in einer Form aufbereitet, wie sie über die Kontakte 1 dem Chip 6 zur Verfügung gestellt werden. Der zweite Elektronikteil 7 kommuniziert mit dem Teil 4 des Chips 6 über die Kommunikationsstrecke 10. Fernbereichsspulen 3, beispielsweise solche von Schwingkreisen unterschiedlicher Kenndaten, sind mit dem Chip 6 verbunden. Ein drittes Elektronikteil 8 gibt akustische oder optische oder sonstwie geartete Signale in Abhängigkeit von unterschiedlichen Werten A1, A2, A3 des Stereosignals aus.

Im Teil 4, welcher Teil des Chips 6 ist, wird ein Stereosignal S1 erzeugt. Dieses Stereosignal S1 kann durch Unterschiede in den Signaleingängen der Nahbereichsspule(n) 2 und/oder der Fernbereichsspule(n) 3 erzeugt werden. Es kann sich bei den Spulen 2, 3 um eine Kombination handeln, bei der eine kleine Spule in einer sie umgebenden größeren Spule enthalten ist. Es kann sich auch um eine Spulenanordnung handeln, wie sie in der ISO 10 536 beschrieben ist, wobei diese Spulenanordnung sich ebenfalls geometrisch innerhalb der Fläche einer größeren Spule befinden kann. Derart ist es möglich, dass beide Spulen im Fernbereich vom gleichen elektromagnetischen Feld durchflossen werden, hingegen im Nahbereich ein zusätzliches Feld genau dort lokalisiert wird, wo sich die Nahbereichsspule(n) 2 befindet. Diese Lokalisierung kann dadurch erreicht werden, dass in einem Terminal eine Spule geometrisch so plaziert ist, dass sie beim Einschub der Chipkarte in das Terminal unmittelbar in der Nähe der Nahbereichsspule(n) 2 zu liegen kommt. Durch diese Anordnung ist gewährleistet, dass die Nahbereichsspule(n) 2 im Fernbereich ein schwaches Signal empfängt, im Nahbereich aber ein starkes Signal. Die Fernbereichsspule(n) 3 wird in ihrer Funktion im Fernbereich nicht gestört, da das Signal für die Nahbereichsspule(n) 2 im Fernbereich zu schwach wäre. Im Nahbereich kann eine Entkopplung z.B. durch unterschiedliche Frequenzen erfolgen. Beide Spulen 2, 3 können auch in ihren Windungen miteinander verknüpft sein, womit sich ihre Signal- und ihre Energieempfänge je nach Verbindungsschaltung, nämlich hintereinander oder parallel, verstärken oder schwächen lassen. Es ist aufgrund dieser Ausführungen möglich, in der ersten Spulenanordnung 2 unterschiedliche Signale und Energien gegenüber der zweiten Spulenanordnung 3 zu erhalten. Diese Unterschiede in den elektromagnetischen Einkopplungen in die Nahbereichs- 2 und/oder Fernbereichsspule(n) 3 sind mittels der Elektronik 6 elektronisch auswertbar und können in den unterschiedlichen Werten eines Stereosignals S1 abgebildet werden.

Das Stereosignal S1 kann einen charakteristischen Wert A1 annehmen, wenn die Nahbereichsspule(n) 2 sich gleichzeitig mit der Fernbereichsspule(n) 3 in einem elektromagnetischen Wechselfeld befindet, und die Energieeinspeisung allein über die Fernbereichsspule(n) 3 ausreicht, um den Chip 6 oder wenigstens Teile 4, 5 des Chip 6 zu aktivieren. Dieser erste charakteristische Wert A1 signalisiert somit, dass sowohl Fernbereichsspule(n) 3 wie auch Nahbereichsspule(n) 2 Signale empfangen, wobei die Energieversorgung für den Chip 6 vollkommen ausreichend über die Fernbereichsspule(n) 3 erfolgt. Damit ist gewährleistet, dass eine Chipkarte, welche aus dem unendlichen Fernbereich in die Nähe eines elektromagnetische Wellen ausstrahlenden Terminals gebracht wird, das Stereosignal S1 mit dem Wert A1 erzeugt. Die Chipkarte kann Funktionen übernehmen, wie sie üblicherweise bei Chipkarten nach ISO 14 443 vorhanden sind.

Kann die Elektronik 6 und/oder der Teil 4 hiervon Unterschiede im elektromagnetischen Wechselfeld zwischen den Fernbereichsspule(n) 3 und Nahbereichsspule(n) 2 indizieren, nimmt das Signal S1 seinen zweiten charakteristischen Wert A2 an. Die Unterschiede im elektromagnetischen Wechselfeld können physikalisch als Phasendifferenzen, Frequenzdifferenzen, Amplitudendifferenzen oder Energiedifferenzen oder Kombinationen aus diesen genutzt werden. Die DE 43 27 334 C1 beschreibt ausschließlich die Nutzung von Phasendifferenzen zur Indikation zwischen dem Nah- und Fernbetrieb. Die Phasendifferenz dürfte das beste Kriterium sein, um zwischen Nah- und Fernbetrieb zu unterscheiden, da im Fernbereich die Überlagerung der Schwingungen von zwei Sendern, wie zwei Spulen, gegeben ist. Nicht in gleicher Weise vorteilhaft sind Unterschiede im elektromagnetischen Wechselfeld aufgrund von Frequenund/oder Amplituden- und/ oder Energiedifferenzen. In all diesen Fällen könnte durch geeignete Maßnahmen, auch über den Fernbereich, eine Signaldifferenz in den Nahbereichs- 2 und Fernbereichsspule(n) 3 erzeugt werden, die den Betrieb Nahbereich vortäuscht. Patentgemäß ist es jedoch möglich, in die Nahbereichsspule(n) 2 beispielsweise eine andere Frequenz einzukoppeln als in die Fernbereichsspule(n) 3. Dies geschieht beispielsweise, indem die der Nahbereichsspule(n) 2 benachbart lokalisierte Spule im Terminal mit einer anderen Frequenz schwingt, als die Spule im Terminal, welche mit der Fernbereichsspule(n) 3 koppelt. Detektiert der Chip 6 bzw. der Teil 4 eine Frequenzdifferenz, wird das Stereosignal S1 vom ersten charakteristischen Wert A1 in seinen zweiten Wert A2 umgeschaltet. Das gleiche geschieht, falls zwischen Nahbereichs- 2 und Fernbereichsspule(n) 3 eine Phasendifferenz auftritt.

Verschwinden die Unterschiede im elektromagnetischen Wechselfeld zwischen den Eingängen über den Nahbereichs- 2 und Fernbereichsspule(n) 3, so soll auch das Stereosignal S1 ausbleiben oder es soll einen weiteren charakteristischen dritten Wert A3 annehmen. Bei Vorliegen dieses dritten Wertes A3 ist in der Elektronik 6 die Information vorhanden, dass der zweite Wert A2 des Stereosignals S1 vorgelegen hat und nicht mehr vorliegt. Für den Chipkartennutzer bedeutet dies, dass die Chipkarte im Bereich eines Nahfeldes war und sich jetzt nicht mehr in diesem befindet. Mit dem dritten Wert A3 können in der Elektronik 6 unterschiedliche Funktionen gesteuert werden, welche sich von denen unterscheiden, die mit den Werten A1 bzw. A2 gesteuert wurden. Damit ist gewährleistet, dass die Chipkarte mit eingeschränkten Funktionen solange nutzbar bleibt, wie sie genügend eingestrahlte Energie über die Fernbereichsspule(n) 3 erhält. Liegt das Stereosignal S1 mit dem Wert A2 vor, ist gewährleistet, dass alle zusätzliche Funktionen, über die eingeschränkten bei den Werten A1 bzw. A3 hinaus, aktiv sind. Die Funktionen können bestimmten Sicherheitsstufen zugeordnet sein, so dass mit dem A2 des Stereosignals die höchste Sicherheitsstufe dem Nahbereich zugeordnet ist.

Wird über die Nahbereichsspule(n) 2 genügend Energie eingespeist, d.h. reicht die Nahbereichskopplung aus, um den Chip 6 bzw. den Teil 4 zu versorgen, kann derTeil 4 die Dominanz über alle weiteren Elektronikteile übernehmen. Da gemäß der Erfindung das Stereosignal S1 in diesem Falle den Wert A2 hat, ist gewährleistet, dass die höchste Sicherheitsstufe nur aktiv ist, wenn und nur wenn sich die Chipkarte im Nahbereich eines Terminals befindet. Voraussetzung hierzu ist, dass die Energie über die Nahbereichsspule(n) 2 ausreicht, um mindestens den Teil 4 der Elektronik 6 aktiv zu halten. In diesem Falle kann über den Teil 4 der Elektronik 4 entschieden werden, ob beispielsweise bestimmte weitere Chipteile oder Ein- und Ausgänge ein- bzw. ausgeschaltet werden.

Das Stereosignal S1 indiziert mit seinen drei Werten A1, A2, A3 unterschiedliche Zustände. In Abhängigkeit von diesen Werten kann entschieden werden, ob über die Kontakte 1 weiterhin kommuniziert werden kann, indem nur Daten ausgetauscht werden, oder ob über die Kontakte auch Energie zur Verfügung gestellt wird oder ob die Kontakte abgeschaltet werden.

Der zweite Elektronikteil 7 ist direkt mit den Nahbereichsspule(n) 2 verbunden. In diesem Elektronikteil 7 werden die Signal- und/oder Energieeingänge über die Nahbereichsspule(n) 2 in einer Form aufbereitet, dass sie mit den Eingängen über die Kontakte 1 vergleichbar sind. Damit ist gewährleistet, dass die Elektronik 6 alle Funktionen, die auf eine Kommunikation über die Kontakte 1 ausgelegt sind, in unveränderter Weise wie bei einem Kontaktbetrieb erfüllen kann. So kann ein Multiplizierwert im Teil 5 des Chips 6 auf die gleiche Weise Daten über die Koppelstrecke 2 wie über die Kontaktstrecke 1 erhalten.

Zusätzlich zum Elektronikteil 6 oder als Teil von 6, ist ein drittes Elektronikteil 8 vorhanden, welches in Abhängigkeit der Werte A1, A2, A3 des Stereosignals S1 optische, akustische oder sonstwie für Menschen wahrnehmbare Signale aussenden. Mit der Wahrnehmung der unterschiedlichen Signale ist es einem Nutzer möglich zu beurteilen, in welchem Zustand, Sicherheitsmodus, die Chipkarte arbeitet. Mit diesem Signal ist es einem Chipkartennutzer möglich, festzustellen, ob beispielsweise die höchste Sicherheitsstufe durch den Wert A2 in einem abgeschlossenem Terminal aktiviert wird. Dies kann durch ein akustisches Signal erfolgen, der dritte Elektronikteil 8 kann aber auch eine visuelle Anzeige darstellen, welche auf der Chipkarte enthalten ist und nach Einschub in einen Terminal beim Herausnehmen anzeigt, dass der Wert A2 aktiviert wurde. Damit ist für einen Nutzer unmittelbar sichtbar, dass die höchste Sicherheitsstufe seiner Chipkarte aktiviert wurde.

Wenn in einer besonderen Ausgestaltung Fernbereichsspule(n) 3 fehlen, ist der Fernbetrieb nur in eingeschränkter Form möglich ist. Wenn aber zusätzlich Kontakte 1 auf der Chipkarte vorhanden sind, kann ein Stereosignal S1 erzeugt werden, welches unterschiedliche Werte A1, A2, ... An anzunehmen imstande ist, wobei diese Werte A1, A2, ...., An Kontaktfunktion oder gemischte Funktion, nämlich sowohl kontaktbehaftet wie auch kontaktfrei, charakterisieren.

Für Testzwecke kann es sinnvoll sein, Daten, welche über Spulen und/oder Kontakte eingehen, über die jeweils weiteren Ein- Ausgabewege zu senden. Über diesen Weg kann das Funktionieren bestimmter Chipteile getestet werden, indem Daten über die Nahbereichsspule(n) 2 eingespeist und ihre richtige Verabeitung und Ausgabe über die Kontakte 1 oder Fernbereichsspulen 3 oder umgekehrt getestet wird.

Statt Nahbereichs- oder Stereospulen 2 und/oder Fernbereichsspulen 3 können auch wenigstens teilweise Kondensatoren verwendet werden. In diesem Falle werden über diese Kondensatoren vorzugsweise Signale bzw. Daten übertragen, da sich eine Energieübertragung durch Ausnützung elektrischer Feldeigenschaften (Energiedichte des elektrischen Feldes) über Kondensatorplatten nicht in gleicher Weise eignet wie eine Energieübertragung über die magnetischen Felddichten bei Spulenkopplungen.

Sämtliche elektronischen Schaltungsteile, nämlich die Elektronik 6, der erste Teil 4 der Elektronik 6, der zweite Teil 5 der Elektronik 6, der zweite Elektronikteil 7 und der dritte Elektronikteil 8, können in einen einzigen Chip 6 integriert sein, wie es auch möglich ist, Teile hiervon als separate Schaltungen aufzubauen, die miteinander funktional verbunden sind.

### Gewerbliche Anwendbarkeit:

Die erfindungsgemäße Chipkarte mit mindestens zwei Spulenanordnungen ist gewerblich anwendbar, um derartige Chipkarten in Abhängigkeit von der Indikation Nahbereich und/oder Fernbereich zu steuern und dabei den Stereoeffekt auszunutzen. Die Nützlichkeit der Erfindung besteht insbesondere darin, daß dadurch beim Zugriff auf den Speicher oder Speicherteile des Chips unterschiedliche Sicherheitsstufen in Abhängigkeit von der Funktion Nah- oder Fernbereich aktiviert werden und somit die Chipkarte unter Ausnutzung des Stereoeffekts in Abhängigkeit vom Nah- oder Fernbetrieb verschiedene Funktionen zu erfüllen imstande ist.

## Patentansprüche

1. Chipkarte mit mindestens zwei Spulenanordnungen (2,3) zur kontaktfreien sowie gegebenenfalls mit Kontakten (1) zur kontaktbehafteten jeweiligen Übertragung von Daten und/oder Energie mit einem Schreib-/Lesegerät (Terminal), wobei eine oder mehrere der Spulen (2) der ersten Spulenanordnung (2) solche für den Nahbereich (Nahbereichs- oder Stereospulen) und eine oder mehrere der Spulen (3) der zweiten Spulenanordnung (3) solche für den Fernbereich (Fernbereichsspulen) sind, mit einer Elektronik (6), die mit den Spulenanordnungen (2,3) und gegebenenfalls den Kontakten (1) verbunden und die geeignet ist, zwischen den unterschiedlichen Spulenanordnungen (2,3) entsprechend unterschiedlicher physikalischer Merkmale, wie Phasen- und/oder Frequenz- und/oder Amplituden- und/oder Energieunterschiede, zu unterscheiden, wobei a) in einem ersten Teil (4) der Elektronik (6) ein Stereosignal (S1) erzeugt wird, welches einen ersten charakteristischen Wert (A1) annimmt, wenn die Fernbereichs- (3) und die Nahbereichsspule(n) (2) sich gleichzeitig in einem elektromagnetischen Wechselfeld befinden und die Energieeinspeisung über die Fernbereichsspule(n) ausreicht, um die Elektronik (6) oder wenigstens den Teil (4) zu aktivieren, und b) Unterschiede im elektromagnetischen Wechselfeld zwischen den Fernbereichs- (3) und den Nahbereichsspule(n) (2) in Form von Phasen- und/ oder Frequenz- und/oder Amplituden- und/oder Energiedifferenzen genutzt werden, um einen zweiten charakteristischen Wert (A2) des Stereosignals (S1) zu erzeugen, c) wenn die Unterschiede im elektromagnetischen Wechselfeld zwischen den Fernbereichs- (3) und den Nahbereichsspule(n) (2) verschwinden, in Folge davon das Stereosignal S1 ausbleibt oder einen weiteren, dritten charakteristischen Wert (A3) annimmt und in diesen beiden Fällen die Chipkarte mit ihrer Umwelt so lange mit eingeschränkten Funktionen nutzbar bleibt, wie die eingestrahlte Energie aus den Fernbereichsspule(n) (3) dies zulässt, d) hingegen bei Vorliegen des Stereosignals (S1) mit dem zweiten charakteristischen Wert (A2) die Chipkarte mit zusätzlichen Funktionen über die eingeschränkte Funktion hinaus nutzbar ist.

2. Chipkarte nach Anspruch 1, dadurch gekennzeichnet,
dass bei Vorliegen des Stereosignals (S1) mit dem ersten Wert (A2) und ausreichender Energieeinspeisung über die Nahbereichsspule(n) (2) der erste Teil (4) der Elektronik (6) die Dominanz über alle weiteren Elektronikteile (5,7,8) innehat, so daß er wahlweise die anderen Elektronikteile (5,7,8) ein oder auszuschalten und/oder bestimmte Funktionen in den anderen Elektronikteilen (5,7,8) zu aktivieren oder zu deaktivieren imstande ist.

3. Chipkarte nach Anspruch 1 mit Kontakten (1), dadurch gekennzeichnet,
dass bei Vorliegen des Stereosignals (S1) mit dem ersten oder zweiten oder dritten Wert (A1,A2,A3) eine Kommunikation über die Kontakte (1) unterbrochen und/oder abhängig vom entsprechenden Stereosignal (S1) gesteuert wird.

4. Chipkarte nach Anspruch 1, dadurch gekennzeichnet,
dass ein zweiter Elektronikteil (7) direkt mit den Nahbereichsspule(n) (2) verbunden ist, welcher die über die Nahbereichsspule(n) (2) eingehenden Signale in einer solchen Form der Elektronik (6) und/oder Teilen (4,5) davon zur Verfügung stellt, wie sie den Signalen bei Eingang über die Kontakte (1) vergleichbar sind, beispielsweise Gleichrichtung, so daß der zweite Elektronikteil (7) Funktionen ausführt, wie sie auch bei Eingang der Signale über die Kontakte (1) ausführbar sind.

5. Chikparte nach Anspruch 1, dadurch gekennzeichnet,
dass ein dritter Elektronikteil (8) vorhanden ist, welche bei Vorliegen eines der unterschiedlichen Werte (A1,A2,A3) oder beim Ausbleiben des Stereosignals (S1) ein für Menschen wahrnehmbares optisches oder akustisches Signal aussendet, womit ein Nutzer der Chipkarte zwischen verschiedenen Funktionsweisen zu unterscheiden in der Lage ist.

6. Chipkarte nach Anspruch 1, dadurch gekennzeichnet,
dass wenigstens ein Teil der Fernbereichsspule(n) (3) und der Nahbereichsspule(n) (2) als Kondensatoren ausgeführt sind, die ebenfalls zum Übertragen von Daten und/oder Energie dienen.

7. Chipkarte nach Anspruch 6 mit Kontakten (1), dadurch gekennzeichnet,
dass ausschließlich Nahbereichsspule(n) (2) und/oder Kondensatoren vorhanden sind, und das Stereosignal (S1) unterschiedliche Werte (A1,A2, ..., An) annimmt, welche jeweils zur Steuerung der Funktionen der Elektronik (6) der Chipkarte dienen.

8. Chipkarte nach Anspruch 1, mit Kontakten (1), dadurch gekennzeichnet,
dass wechselweise über die Fernbereichsspule(n) (3) und/oder die Nahbereichsspule(n) (2) Energie und Daten und/oder über die Kontakte (1) Daten und Energie ausgetauscht werden, wobei die von den Kontakten eingehenden Daten über die Spulen (2,3) und die über Spulen (2,3) eingegebenen Daten über die Kontakte (1) ausgegeben werden.

9. Chipkarte nach Anspruch 1, dadurch gekennzeichnet,
daß bei der Verwendung von unterschiedlichen Frequenzen als physikalisches Unterscheidungsmerkmal in die Nahbereichsspule(n) (2) eine andere Frequenz eingekoppelt wird als in die Fernbereichsspule(n) 3, indem die der Nahbereichsspule(n) 2 benachbart lokalisierte Spule des Terminals mit einer anderen Frequenz schwingt, als diejenige Spule des Terminals, welche mit der Fernbereichsspule(n) 3 der Chipkarte gekoppelt ist.

## Claims

1. Chip card with at least two coil arrangements (2, 3) for contact-free transmission as well as, potentially, contact-effected transmission with contacts (1) of data and/or energy to a write-read device (terminal), whereby one or more of the coils (2) of the first coil arrangement (2) are coils for the near range (near range or stereo coils) and one or more of the coils (3) of the second coil arrangement (3) are coils for the far range (far range coils), with an electronics (6) that is connected to the coil arrangements (2, 3) and, potentially, to the contacts (1) and that is suitable for distinguishing between the different coil arrangements (2, 3) according to different physical features such as phase and/or frequency and/or amplitude and/or energy differences, characterized in that
a) a stereo signal (S1) is generated in a first part (4) of the electronics (6), this stereo signal (S1) assuming a first characteristic value (A1) when the far range (3) and the near range (2) coil or coils are simultaneously located in an electromagnetic alternating field and the energy feed via the far range coil or coils suffices in order to activate the electronics (6) or at least the part (4);
b) whereby differences in the electromagnetic atternating field between the far range coil or coils (3) and the near range coil or coils (2) in the form of phase and/or frequency and/or amplitude and/or energy differences are utilized in order to generate a second characteristic value (A2) of the stereo signal (S1);
c) where the differences in the electromagnetic alternating field between the far range coil or coils (3) and the near range coil or coils (2) disappear, the stereo signal Sl fails to arrive as a result thereof or assumes a further, third characteristic value (A3) and, in both these instances, the chip card remains useable with its environment with unlimited function as long as the energy that is beamed in from the far range coil or coils (3) allows it;
d) by contrast whereto, given presence of the stereo signal (S1) with the second characteristic value (A2), the chip card is useable with additional functions beyond the limited function.

2. Chip card according to claim 1, characterized in that, given the presence of the stereo signal (S1) with the first value (A2) and adequate energy feed via the near range coil or coils (2), the first part (4) of the electronics (6) has dominance over all further electronics parts (5, 7, 8), so that it is capable of optionally switching the other electronics parts (5, 7, 8) on or off and/or of activating or deactivating specific functions in the other electronics parts (5, 7, 8).

3. Chip card according to claim 1 with contacts (1), characterized in that, given the presence of the stereo signal (S1) with the first or second or third value (A1, A2, A3), a communication via the contacts (1) is interrupted and/or is controlled dependent on the corresponding stereo signal (S1).

4. Chip card according to claim 1 characterized in that a second electronic parts (7) is directly connected to the near range coil or coils (2), this second electronics part (7) making the signals entering via the near range coil or coils (2) available to the electronics (6) and/or parts (4, 5) thereof in a form comparable to the signals given input via the contacts (1), for example rectification, so that the second electronics part (7) implements functions of a type that can also be implemented given reception of the signals via the contacts (1).

5. Chip card according to claim 1, characterized in that a third electronics part (8) is present that, given the presence of one of the different values (A1, A2, A3) or given the absence of the stereo signal (S1), outputs an optical or acoustic signal perceptible to a human, wherewith a user of the chip card is capable of distinguishing between different functionings.

6. Chip card according to claim 1, characterized in that at least a part of the far range coil or coils (3) and of the near range coil or coils (2) are fashioned as capacitors that likewise serve for the transmission of data and/or energy.

7. Chip card according to claim 6 with contacts (1), characterized in that only near range coil or coils (2) and/or capacitors are present, and the stereo signal (1) assumes different values (A1, A2 ,.....,An) that respectively serve for the control of the functions of the electronics (6) of the chip card.

8. Chip card according to claim 1, with contacts (1), characterized in that energy and data via the far range coil or coils (3) and/or the near range coil or coils (2) and/or data and energy via the contacts (1) are exchanged in alternation, whereby the data arriving from the contacts are output via the coils (2, 3) and the data input via coils (2, 3) are output via the contacts (1).

9. Chip card according to claim 1 characterized in that, given employment of different frequencies as physical distinguishing feature, is different frequency is coupled into the near range coil or coils (2) than into the far range coil or coils (3), in that the localized coil of the terminal neighboring the near range coil or coils (2) oscillates with a different frequency from that coil of the terminal that is coupled to the far range coil or coils 3 of the chip card.

## Revendications

1. Carte à puce comportant au moins deux dispositifs bobines (2,3) servant à la transmission sans contact ou, le cas échéant, avec contacts (1) servant à la transmission à contact d'informations et/ou d'énergie à un lecteur-enregistreur (terminal), une ou plusieurs des bobines (2) du premier dispositif bobines (2) étant destinées aux zones à proximité immédiate (bobines courte distance ou bobines stéréo) et une ou plusieurs des bobines (3) du deuxième dispositif bobines étant destinées aux zones d'action lointaines (bobines longue distance), et comportant une électronique (6) qui est connectée aux dispositifs bobines (2,3) et le cas échéant aux contacts (1) et qui est en mesure de distinguer entre les différents dispositifs bobines (2,3) en fonction des différentes caractéristiques physiques, telles que les différences de phase et/ou de fréquences et/ou d'amplitude et/ou d'énergie, a) un signal stéréo (SI) étant généré dans une première partie (4) de l'électronique lequel revêt une valeur caractéristique (A1), lorsque les bobines longue distance (3) et courte distance (2) se trouvent simultanément dans un champ électromagnétique alternatif et que l'alimentation en énergie assurée par la (les) bobine(s) longue distance suffit pour activer l'électronique (6) ou au moins la partie (4), b) les différences dans le champ électromagnétique alternatif entre les bobines longue distance (3) et courte distance (2) sous forme de différences de phase et/ou de fréquence et/ou d'amplitude et/ou d'énergie étant utilisées pour générer une deuxième valeur caractéristique (A2) du signal stéréo (S1), c) le signal stéréo S1 n'étant pas généré ou revêtant une autre troisième valeur caractéristique (A3), lorsque les différences dans le champ électromagnétique alternatif entre les bobines longue distance (3) et courte distance (2) disparaissent, la carte à puce, dans les deux cas, pouvant être utilisée dans son environnement avec des fonctions restreintes aussi longtemps que l'énergie provenant des bobines longue distance (3) le permet, d) par contre, la carte à puce pouvant être utilisée avec des fonctions supplémentaires au-delà de la fonction restreinte, en présence du signal stéréo (S1) revêtant la valeur caractéristique (A2).

2. Carte à puce selon la revendication 1,
caractérisée en ce que, en présence du signal stéréo (S1) qui revêt la première valeur caractéristique (A2) et lorsque l'alimentation en énergie via la (les) bobine(s) courte distance est suffisante, la première partie (4) de l'électronique (6) domine toutes les autres parties électroniques (5,7,8), de sorte qu'elle puisse enclencher ou déclencher au choix les autres parties de l'électronique (5,7,8) et/ou activer ou désactiver des fonctions déterminées dans les autres parties de l'électronique.

3. Carte à puce selon la revendication 1 dotée de contacts (1),
caractérisée en ce que, en présence du signal stéréo (SI) avec la première ou la deuxième ou la troisième valeur (A1,A2,A3), la communication via les contacts (1) est interrompue et/ou asservie au signal (SI) correspondant.

4. Carte à puce selon la revendication 1,
caractérisée en ce qu'une seconde partie électronique (7) est connectée directement aux bobines courte distance (2), laquelle met à la disposition de l'électronique (6) et/ou de parties (4,5) de cette dernière les signaux reçus par la (les) bobine(s) courte distance, cela dans une forme qui est comparable aux signaux reçus par les contacts (1), par exemple redressement, de sorte que la deuxième partie électronique (7) effectue des fonctions pouvant être effectuées également lorsque les signaux sont reçus par les contacts (1).

5. Carte à puce selon la revendication 1,
caractérisée en ce qu'elle comporte une troisième partie électronique (8) qui en présence de l'une des valeurs différentes (A1,A2,A3) ou en l'absence de signal stéréo (S1), émet un signal optique ou acoustique perceptible à l'utilisateur de la carte à puce qui par conséquent peut distinguer entre les différents modes de fonctionnement.

6. Carte à puce selon la revendication 1,
caractérisée en ce qu'au moins une partie de la (des) bobine(s) longue distance (3) et de la (des) bobine(s) courte distance (2) se présentent sous forme de condensateurs servant eux aussi à la transmission de données et/ou d'énergie.

7. Carte à puce selon la revendication 6,
caractérisée en ce qu'elle comporte exclusivement une (des) bobine(s) courte distance (2) et/ou des condensateurs et que le signal stéréo (S1) revêt des valeurs différentes (A1,A2,..., An) qui servent à asservir les fonctions de l'électronique (6) de la carte à puce.

8. Carte à puce selon la revendication 1, dotée de contacts,
caractérisée en ce que de l'énergie et des informations sont échangées tour à tour (de façon alternante?) via la (les) bobine(s) longue distance (3) et/ou la (les) bobine(s) courte distance (2) ou que des informations et de l'énergie sont échangées via les contacts (1), les informations en provenance des contacts étant sorties via les bobines (2,3), et les informations provenant des bobines (2,3) étant sorties via les contacts (1).

9. Carte à puce selon la revendication 1,
caractérisée en ce que, lorsqu'on utilise différentes fréquences en tant que caractéristique physique distinctive, la (les) bobine(s) courte distance (2) est (sont) couplée(s) à une fréquence différente de celle de la (des) bobine(s) longue distance (3), la bobine du terminal disposée à proximité de la (des) bobine(s) courte distance (2) oscillant à une autre fréquence que la bobine du terminal couplée avec la (les) bobine(s) longue distance (3) de la carte à puce.
